# EUROPEAN PATENT APPLICATION

(11) **EP 4 535 182 A1**
(43) Date of publication of application: **09.04.2025**
(21) Application number: 23386090.7
(22) Date of filing: 02.10.2023
(51) Int. Cl.: G06F 16/172, G06F 16/17

(54) **COMPUTER-IMPLEMENTED METHOD FOR PREFETCHING DATA**

(71) Applicant: Petagene Ltd., Suffolk CB9 8AD (GB)
(72) Inventor: GREENFIELD, Daniel, Haverhill, Suffolk, CB9 8AD (GB); PAPANIKOS, Nikolaos, Haverhill, Suffolk, CB9 8AD (GB)
(74) Representative: Mewburn Ellis LLP

(57) **Abstract**

A computer-implemented method is provided for prefetching data from a remote object storage system. The method comprises: monitoring behaviour of a process or thread running on a client-computer, the client-computer being connected to the remote object storage system hosted on one or more servers; deriving client-side processing metadata from the monitored behaviour; predicting an access request which may be made by the process or thread running on the client-computer from the remote object storage system using the derived client-side processing metadata; prefetching files or a portion of a file from the remote object storage system corresponding to the predicted access request; and storing the prefetched file or portion of the file on the client-computer.

## Description

### TECHNICAL FIELD

The present invention relates to a computer-implemented method for prefetching data from a remote object storage system.

### BACKGROUND

A file system stores and manages data as mutable files in a hierarchy of directories. Each file stored within a file system has a path which describes its location in the hierarchy of directories. File systems allow for a computer to distinguish and mark different sectors of permanent storage for use by different applications of the computer. They have become the standard in computer system storage. However, the hierarchical architecture of file systems, their random-access mutability, and their strong consistency guarantees, each limit the ability of file systems to scale to accommodate extremely large volumes of data.

Object storage does not have this scalability issue. Object storage is a data structure which stores and manages data as an unstructured set of objects with weaker consistency guarantees. Each object is immutable, but replaceable in full, and contains a unique identifier, metadata, and the stored data itself. Object storage systems have a flat structure, together with these other key differences, which enables them to scale to store and manage extremely large amounts of unstructured data, even up to exabyte loads. The scalability of object storage has made it the default data architecture for managing unstructured data in cloud infrastructures, and it is the primary storage format used by the majority of major cloud service providers.

When a file system based application requires data from object storage, this data must be fetched. Object storage is known to have a high latency in comparison to file system storage, meaning that it takes a relatively long time to fetch data from object storage. To reduce the effect of this latency on performance, some modern applications prefetch data from object storage. Prefetching is a method for speeding up fetch operations by prefetching data which is expected to be needed by the application in the future. However, conventional prefetching methods, such as sequential prefetching, are not efficient at prefetching useful data from object storage systems.

The present invention was arrived at in light of the above considerations.

### SUMMARY

In a first aspect, embodiments of the invention provide a computer-implemented method for prefetching data from a remote object storage system, the method comprising: monitoring behaviour of a process or thread running on a client-computer, the client-computer being connected to the remote object storage system hosted on one or more servers; deriving client-side processing metadata from the monitored behaviour; predicting an access request which may be made by the process or thread running on the client-computer from the remote object storage system using the derived client-side processing metadata; prefetching a file or a portion of a file from the remote object storage system corresponding to the predicted access request; and storing the prefetched file or portion of the file on the client-computer.

The method of the first aspect advantageously provides a process or thread by which file-system based computer processes or threads may prefetch data from remote object storage. This is particularly advantageous where an intermediary is used to translate file access requests made by a process or thread into equivalent object-storage requests. The method utilises client-side processing metadata derived from monitoring the processes or threads. In this way, the method is capable of intelligently prefetching data from object storage. As a results of this, the wait time an application spends after making a fetch request is reduced. This reduces the apparent latency of the object storage system and thereby improves the performance of the application.

The monitored behaviour may be file system requests made by the process or thread, the file system requests corresponding to data stored in the remote object storage system hosted by the one or more servers. The monitored behaviour may also include operations performed by the process or thread. The method may be used in combination with an intermediary which translates file access requests made by a process or thread into equivalent object-storage requests.

The method may include predicting a plurality of access requests, and the method may include prefetching the or each file or portion of file corresponding to each of the plurality of access requests.

By object storage system, it may be meant a data storage architecture which stores unstructured data typically accessible by a REST API. The unstructured data being sectioned into objects, each object including the data, metadata, and a unique identifier. Data in an object storage system is obtained by using the unique identifier. Object storage systems are commonly implemented in cloud infrastructures for managing large amounts of data. Unlike a file storage system, the objects of an object storage system are immutable and can only be replaced with new objects with the same unique identifier. By file storage system it may be meant a hierarchical data storage system organised under a hierarchy of directories and subdirectories. Data in a file storage system is obtained by using a path describing the location of the data within the file system.

The predicted access request of the computer-implemented method may include an inter-file access request. By inter-file access requests, it may be meant access requests relating to a different file to the file(s) currently open.

The method may repeat, in that the process or thread may be continuously monitored and client-side processing metadata continuously derived. The predictions may, likewise, be continuously made or may be made periodically or responsive to client-side processing data being derived. The prefetching may be performed as soon as a prediction is made or may be performed periodically.

This prediction of access requests may be conducted within the scope of a particular PID (process ID) and/or TID (thread ID). The prediction may involve extracting a binary name based on the PID and/or TID. This may be extracted, for example, from /proc/PID/cmdline (where PID is the process ID, for example 1234).

Moreover, the computer-implemented method may further comprise determining a stack trace fingerprint of a file access request made by process or thread, and using the stack trace fingerprint when making the predictions. For example, the stack trace fingerprint may be used to limit a scope of predictions (relative to the file storage system).

By stack trace fingerprint, it may be meant a report of the active stack frames at a point of time during the execution of the process or thread. Stack fingerprints may be obtained either via a shim that intercepts the open(), read(), pread(), Iseek(), and readdir() operations, or by or by an Extended Berkeley Packet Filter (eBPF) that does system-wide interception of these operations. The determination of a stack trace fingerprint allows the scope of PID and/or TID over which prediction is conducted to be narrowed, thereby resulting in a more efficient prefetching method.

The method may also include referencing a persistent database to give the predicted properties of calls such as open(), read(), pread(), Iseek() and readdir(), based on the name of the executable, identifiers(s) embedded in the executable itself (such as the .gnu.build_id field in the PT_NOTE section of ELF executables), and/or a stack trace fingerprint of the call. This persistent database may be a shared-memory database, i.e. a database which is shared between multiple processes for LD_PRELOAD shim interception.

The use of inter-file access requests allows for the prefetching of files or portions of files which have not yet been opened or requested by a process or thread, but are likely to soon be opened or requested by it. In this way, the method is able to prefetch data which is not immediately requested by the process or thread running on a client-computer, but data which would nonetheless be fetched by the process or thread. As such, the process or thread will typically wait for less time when making fetch requests (because the data may already be present on the client-device). The process or thread would see an improved performance, for example a decreased runtime. A higher-level application of the process or thread would also see this improved performance.

Traditionally, prefetching has been limited to intra-file activity - for example, where a process requests a certain portion of data from a file, the prefetcher would also fetch additional data that sequentially follows the request made. Since a file is a linear (sequential) arrangement of bytes of data, this constraint makes it easier to predict what data may be requested next. In contrast, inter-file prefetching has no fixed linear arrangement of files. There may well be millions of possible files that could be requested next by a process. This makes inter-file based prediction considerably harder than intra-file based prediction.

For file systems accessed over a computer network, there is generally no visibility by the file system server(s) (such as over the NFS or CIFS protocols) that allow it to disentangle file-system requests made by one process on a node from another process on that node, let alone disentangle file-system requests made by one thread in a process from another thread in the same process. This limited visibility hampers the ability of the file system server to predict access patterns. Indeed, such file systems typically serve diverse traffic from many processes per node, and across many nodes, making file access traffic appear quite random and unpredictable from the view of the file system server(s). Indeed, there is far more information available on the client side that is hidden to the server(s) that can be used to inform file access prediction.

The computer-implemented method may derive the client-side processing metadata by identifying a command-line entered on the client-computer (for example into a command-line interface), and determining whether the command-line specifies one or more files or directories hosted on the remote object storage system, and predicting the inter-file access requests utilises the determination.

Typically, command-lines reference file lists and/or directories. Advantageously, the present method may prefetch the files or files of directories listed in such a command line to thereby improve the performance of the thread or process.

Monitoring behaviour of the process or thread may include using a SHIM library or kernel interception method to monitor file-access requests made by the process or thread running on the client computer, and/or to identify the respective process or thread corresponding to said file-access requests.

The computer-implemented method may further derive the client-side processing metadata by identifying patterns in file access operations, for example open file operations, made on the client-computer.

Despite there being potentially millions of possible files that could be requested next by a process, the present invention leverages the fact that such decisions by the process are most likely entirely deterministic, and thus that by observing what the process does, it is possible to predict which file is likely to be accessed next.

The method may look at consecutive open() operations that specify which file to open within the scope of the PID (Process Identifier) or TID (Thread Identifier within a process), and optionally also within the stack fingerprint, to check if consecutive files that are opened are ordered with respect to each other according to: an order returned by a previous readdir() operation, lexicographical order (so that "filename2" succeeds "filename10", numerical order (so that "filename2" precedes "filename10"), and/or numerical order by the inode number of the files. The operations may be filtered by certain extensions, for example ".jpg" or ".png" if a process is accessing only image files. The method may perform a breadth-first search of all possibilities to eliminate any impossible combinations. For example, the method may look at consecutive open() accesses by a process, looking at file extensions for opened files as possible filters, and explore each possible combination of ordering, filtering, and scope (as listed above) to eliminate mismatches and find a combination that acts as a good file predictor. In this way, the data requested by access operations forming this pattern may be prefetched, improving the performance of the process or thread.

The computer-implemented method may further derive the client-side processing metadata by identifying one or more command files in the remote object storage system to be opened or which have been opened, and which refer to other files in the remote object storage system. Identifying one or more command files includes identifying a command used to open the command file, and determining if it refers to any further files.

Command files may be split into two categories: explicit and implicit command files. Explicit command files generally contain only a list of files to be opened, such as the file used by the *"rsync -file-from"* command,. These command files typically either contain commands which contain files as arguments, or contain themselves references to files.

Implicit command files may specify files to be opened, but also contain other content indicative of file access requests. For example, a C source file may contain code as well as *"#include"* preprocessor directives. These directives reference header files, and the method may include opening and processing these files. Each header file may contain further header files which will be opened and processed. This may be advantageous as such inter-file searching allows for a greater volume of data to be prefetched, thereby further improving the performance of the thread or process.

The identification of the one or more command files may include parsing a block of the file which is to be or has been opened, and identifying in the block of the file patterns of text corresponding to file extensions.

In looking for file extension type patterns, a first block of read data of a certain size (for example 4KB) is parsed. Text matching "[alphanumerical character].[alphanumerical character][0 to 3 optional alphanumerical characters][non- alphanumerical character]" combinations are searched for and any extensions found are recorded. If subsequent open() operations are found to match this pattern, then the data is checked again for exact file matches, and the combination is recorded as a positive prediction to be later used.

In the case that a file extension is recognised, possible sub-files are extracted according to a parser which is specific to that file extension. In the case that the extension is not recognised, it is next tested whether the file is a text file. For example, a check for non-UTF8 valid encoding may be performed (for example on the first 1 KB of the file), by checking for non-UTF8 values. If the file is identified as a text file, the first block of read data of a certain size (for example 4KB) can be processed for filename-like patterns.

The analysis of both explicit and implicit command files may result in a greater volume of data being prefetched by the method, and may therefore result in an improvement in performance of the thread of process.

The predicted access requests may include intra-file access requests. By intra-file access requests, it may be meant access requests relating to different parts of a file which is currently open. Therefore, whilst portions of a file may have already been requested by the process or thread, the predicted access request may relate to further portions of the file which have not yet been requested by the process or thread.

Deriving the client-side processing metadata may include detecting an access type from a plurality of access types, wherein predicting the intra-file access requests includes utilising the detected access type.

Deriving the client-side processing metadata may also include determining and recording a pattern for a given file access operation, and predicting the intra-file access requests includes utilising the pattern.

For example, the following access types may be detected and used for prediction: sequential, interleaved access, and head/tail/middle combinations. Head/tail/middle combinations may comprise a mix of a first sequential read of bytes (which may be small, for example less than 4MB) at the start of a file, a further sequential read of bytes at the end of the file (for example the last 4MB), and a sequential read in between the first and further sequential reads which is larger than the first and further sequential reads. These reads may follow any of the following patterns: Head-tail-middle, Tail-head-middle, Tail-middle, Head-middle. As such, the method may be able to predict which portions of a given remote file to prefetch, thereby improving the performance and accuracy of the thread or process.

Conveniently, deriving the client-side processing metadata may also include intercepting one or more file access requests, and predicting the intra-file access requests includes utilising the intercepted file access requests. This may involve the interception of commands or files such as: opendir() or readdir(), open(), read() or pread(), Iseek() and/or/proc/PID/cmdline.

The method may also include, for each prefetched file, determining whether the respective prefetched file was requested by the process or thread.

Typically, the method may also include determining if the percentage of prefetched files being requested by the process or thread exceeds a threshold percentage, and, if it does, storing prediction parameters in a database. The next time the application is started, this database can then be consulted to determine which prediction parameters to use, without having to re-learn them.

Typically, this threshold percentage may be 95%, such that accurate prediction parameters may be stored for future prefetching.

The computer-implemented method may include any one, or any combination insofar as they are compatible, of the optional features set out with reference to the first aspect.

The invention includes the combination of the preferred features described except where such a combination is clearly impermissible or expressly avoided.

In a second aspect, embodiments of the invention provide a computer comprising a processor and memory, wherein the memory contains machine executable instructions which, when executed on the processor, cause the processor to:
monitor behaviour of a process or thread running on a client-computer, the client-computer being connected to a remote object storage system hosted on one or more servers;
derive client-side processing metadata from the monitored behaviour;
predict an access request which may be made by the process or thread running on the client-computer from the remote object storage system using the derived client-side processing metadata;
prefetch a file or a portion of a file from the remote object storage system corresponding to the predicted access request; and
store the prefetched file or portion of the file on the client-computer.

The memory may contain machine executable instructions which, when executed on the processor, cause the processor to perform the method of the first aspect including any one, or any combination insofar as they are compatible, of the optional features set out with reference thereto.

In a third aspect, embodiments of the invention provide a monitoring and prefetching module for use with a computing device, the monitoring and prefetching module being configured to:
monitor behaviour of a process or thread running on the computing device, the client-computer being connected to the remote object storage system hosted on one or more servers;
derive client-side processing metadata from the monitored behaviour;
predict an access request which may be made by the process or thread running on the computing device from the remote object storage system using the derived client-side processing metadata;
prefetch a file or a portion of a file from the remote object storage system corresponding to the predicted access request; and
store the prefetched file or portion of the file on the computing device.

The monitoring and prefetching module may be, for example, an interposing layer between an application layer of the computer and the kernel or network interface. For example, the monitoring and prefetching module may operate as a LD_PRELOAD shim on a Linux operating system. In another example, the prefetching may occur as part of a FUSE mount on a *NIX operating system, interacting with a monitoring layer that uses an equivalent to eBPF in the kernel. The monitoring and prefetching module may be a combination of two sub-modules, one performing the monitoring, deriving, and predicting steps, and one performing the prefetching step.

Further aspects of the present invention provide: a computer program comprising code which, when run on a computer, causes the computer to perform the method of the first aspect; a non-transitory computer readable storage medium storing a computer program comprising code which, when run on a computer, causes the computer to perform the method of the first aspect; and a computer system programmed to perform the method of the first aspect.

### BRIEF DESCRIPTION OF THE DRAWINGS

Figure 1 is a flow chart showing a computer-implemented method; and
Figure 2 shows a system.

### DETAILED DESCRIPTION

Aspects and embodiments of the present invention will now be discussed with reference to the accompanying figures. Further aspects and embodiments will be apparent to those skilled in the art.

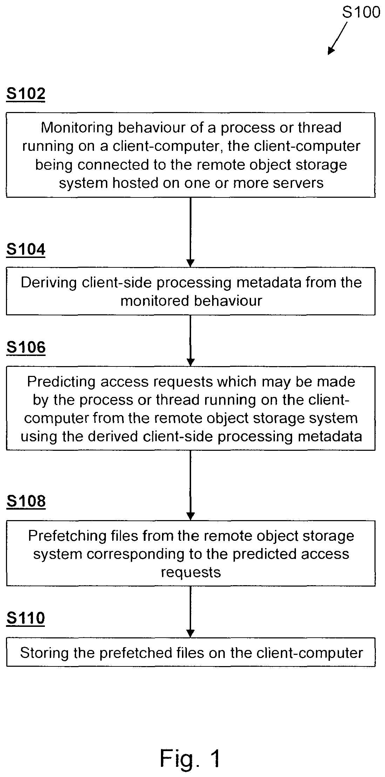

Figure 1 is a flow chart showing a computer-implemented method S100. In a first step, S102, the behaviour of a process or thread running on the client-computer is monitored. For example, the file system requests made by a process or thread running on a client-computer are monitored which correspond to data stored in a remote object storage system hosted on one or more servers which are connected to the client-computer over a network (e.g., a WAN or LAN network). This monitoring can be performed, for example, by a separate process or thread also running on the client-computer. In some examples, the monitoring is performed by a dedicated monitoring and prefetching module which sits between applications running on the computer and the kernel.

The monitoring may include utilising the scope of a particular process ID (PID) and/or thread ID (TID). A binary name is extracted based on the PID/TID, for example by looking at /proc/PID/exe. A stack trace fingerprint of a file access call can also be generated and subsequently used for predictions. The stack trace fingerprints in this example are generated to be independent of library relocations. The relative offsets of library calls can be chained into a hash to generate a fingerprint. For example, a stack trace consists of a list of 64-bit instruction offsets. These offsets correspond to positions within the process binary and shared libraries. The memory map of the process is used to determine the relative offsets in the executable section of the process binary or shared library as loaded in memory. This then results in a list of relative 64-bit instruction offsets. A hash is computed (such as a SHA256 hash or other hashing function) over this list. This is used as a stack trace fingerprint. In this manner, if this application were to be launched again, even though the operating system may load the process and libraries at different offsets (thus changing the list of absolute offsets), a particular sequence of function calls that led to an open() would robustly correspond to a particular stack trace fingerprint value.

In a subsequent step, S104, client-side processing metadata is derived from the monitored behaviour. This can be derivation can be performed either on the client-computer itself or on a different device which has access to the monitored behaviour. The client-side processing metadata describes the file access requests, and patterns within them, for example by listing consecutive open() operations within the scope of the PID/TID.

Next, in step S106, access requests are predicted which may be made by the process or thread running on the client-computer from the remote object storage system. This prediction can be performed in multiple ways, as has been discussed above. Typically, the predictions made are inter-file and/or intra-file predictions. The specific predictions will be dependent on the client-side processing metadata available and the behaviour of the process and/or thread being monitored. In effect, the component performing the predictions has access to a plurality of prediction methodologies, and deploys a given prediction methodology on the basis of the processing metadata available to it (which is in turn determined by the behaviour of the process and/or thread being monitored).

Having predicted one or more access requests, the method moves to step S108 where the predicted access requests are executed and so files prefetched from the remote object storage system which correspond to those predicted access requests. The method then moves to step S110 where the prefetched files are stored on the client-computer. If the monitored process or thread then makes an access request corresponding to a predicted one, the requested file will immediately be available as it is stored on the client-computer.

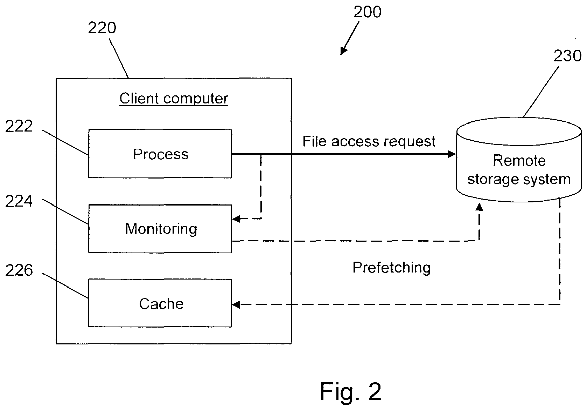

Figures 2 shows a system 200. The system includes a client computer 220, which includes a process or thread 222 running on a processor. There is also a monitoring and prefetching module 224, which performs the steps S102 - S110 as discussed above. Therefore, as the process makes file access requests to a remote storage system 230 (for example over a network), client-side processing metadata can be derived by the monitoring and prefetching module. Once a prediction is made, the files corresponding to the prediction can be obtained from the remote storage system and saved to a cache 226 within the client computer.

In one example, the method was applied to a machine learning workload. A single node PyTorch instance was used with a 86 GB Zarr image dataset. For machine learning workloads, it is useful to have high throughput, and content is fed into the machine learning engine in a shuffled way per epoch. In PyTorch, an interposition library was used that intercepts the PyTorch DataLoader so that when a shuffled list of accesses is generated, the list was evaluated early, translating them into a list of predicted file accesses. This information was fed to the file system prefetcher by opening and writing it into a special file that is interpreted by the file system prefetcher as a request by the monitoring layer to supply prefetch information, rather than for a real file to be written. On the file-system side, multiple such file opens are supported concurrently. However, the access may not be a file open, it could also be a setxattr operation or other file system operation that can inform the file system prefetcher to feed the predictions. The information was added to a per-PID/TID queue that after multiple consecutive hits leads to prefetching. In this example, the monitoring was performed by two components. A first monitoring component was a general purpose one in the FUSE module that monitors process-specific properties, and has an interception for a special file in the filesystem. It is able to identify which process is writing to that special file, and therefore for which process predictions are intended. Separately, the second monitoring component was a separate monitoring interposition library specifically for PyTorch that then fed the predictions via writing to that special file. It was found that this method increased the throughput by a factor of 60x (from around 260 Mbps to around 20 Gbps).

When a process closes, the component performing the monitoring and prefetching of it checks what the hit ratio was (that is, how many times a prefetched file was subsequently accessed by the monitored process or thread). Where the hit ratio was higher than a preset value (e.g., 95%) for a minimum number of files (e.g., 5) prediction parameters are stored for future use. The prediction parameters can include data relating to the files which were successfully prefetched. This may comprise a prediction scope, such as if it is limited by PID or TID, or whether it is limited to a particular stacktrace fingerprint for an operation such as open(). Within the scope, the parameters may specify whether a control file was previously used, or if the filename ordering was based on readdir() order, lexicographic, numerical or inode order, or if filename filtering was detected (such as restricting to ".jpg" and ".png" even though other file extensions were also present). The inter-file prediction can also be performed by interception of various commands, such as opendir() / readdir(); open(); read() / pread(); lseek(); and /proc/PID/cmdline. When intercepting these, the arguments will be examined to determine if files can be prefetched.

The above example was for inter-file prediction, a further example considered below is for intra-file prediction. For an MP4 file for, for example, media reading logic is activated. The MP4 head is read and parsed to get to the Atom. The MOOV Atom is then located (from information in the header), and optionally parsed to find start locations of chunks of video/audio data. A second reader is then spawned to read from the MOOV Atom (which contains all the metadata required for decoding the video). Switching to random mode is prevented by having the second (or additional) reader handle requests. For example, the first reader may be reading video data whilst the second reader reads audio data. In general, the method is not limited to two readers, and is capable of sequential reading per reader from multiple locations simultaneously. Based on the MOOV Atom, the chunk boundaries indicate how much data should be speculatively read (e.g., up to some later chunk boundary). That is, the method reads an integer number of chunks rather than fractional chunks. The MOOV Atom can also be used to indicate how many audio tracks and video tracks there are, and therefore how many readers should be used.

The systems and methods of the above embodiments may be implemented in a computer system (in particular in computer hardware or in computer software) in addition to the structural components and user interactions described.

The term "computer system" includes the hardware, software, and data storage devices for embodying a system or carrying out a method according to the above-described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the disclosure in diverse forms thereof.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method for prefetching data from a remote object storage system, the method comprising:
monitoring behaviour of a process or thread running on a client-computer, the client-computer being connected to the remote object storage system hosted on one or more servers;
deriving client-side processing metadata from the monitored behaviour;
predicting an access request which may be made by the process or thread running on the client-computer from the remote object storage system using the derived client-side processing metadata;
prefetching a file or a portion of a file from the remote object storage system corresponding to the predicted access request; and
storing the prefetched file or portion of the file on the client-computer.

2. The computer-implemented method of claim 1, wherein the predicted access request includes an inter-file access request.

3. The computer-implemented method of claim 1 or 2, wherein deriving the client-side processing metadata includes identifying a command-line entered on the client-computer, and determining whether the command-line specifies one or more files or directories hosted on the remote object storage system, and predicting the inter-file access requests utilises the determination.

4. The computer-implemented method of either of claims 2 and 3, wherein monitoring behaviour of the process or thread includes using a SHIM library or kernel interception method to monitor file-access requests made by the process or thread running on the client computer, and/or to identify the respective process or thread corresponding to said file-access requests.

5. The computer-implemented method of any of claims 2-4, wherein deriving the client-side processing metadata includes identifying one or more command files in the remote object storage system to be opened or which have been opened, and which refer to other files in the remote object storage system.

6. The computer-implemented method of claim 5, wherein identifying the one or more command files includes identifying a command used to open the command file, and determining if it refers to any further files.

7. The computer-implemented method of claim 5 or 6, wherein identifying the one or more command files includes parsing a block of the file which is to be or has been opened, and identifying in the block of the file patterns of text corresponding to file extensions.

8. The computer-implemented method of any preceding claim, the method further comprising determining a stack trace fingerprint of a file access request made by process or thread, and using the stack trace fingerprint when making the predictions.

9. The computer-implemented method of any preceding claim, wherein the predicted access request includes an intra-file access requests.

10. The computer-implemented method of claim 9, wherein deriving the client-side processing metadata includes detecting an access type from a plurality of access types, and wherein predicting the intra-file access requests includes utilising the detected access type.

11. The computer-implemented method of claim 9 or 10, wherein deriving the client-side processing metadata includes determining and recording a pattern for a given file access operation, and predicting the intra-file access requests includes utilising the pattern.

12. The computer-implemented method of any of claims 9 - 11, wherein deriving the client-side processing metadata includes intercepting one or more file access requests, and predicting the intra-file access requests includes utilising the intercepted file access requests.

13. The computer-implemented method of any preceding claim, the method including, for each prefetched file, determining whether the respective prefetched file was requested by the process or thread.

14. The computer-implemented method of claim 13, the method including determining if the percentage of prefetched files being requested by the process or thread exceeds a threshold percentage, and, if it does, storing prediction parameters in a database.

15. A computer comprising a processor and memory, wherein the memory contains machine executable instructions which, when executed on the processor, cause the processor to:
monitor behaviour of a process or thread running on a client-computer, the client-computer being connected to a remote object storage system hosted on one or more servers;
derive client-side processing metadata from the monitored behaviour;
predict access requests which may be made by the process or thread running on the client-computer from the remote object storage system using the derived client-side processing metadata;
prefetch a file or a portion of a file from the remote object storage system corresponding to the predicted access request; and
store the prefetched file or portion of the file on the client-computer.
